# EUROPÄISCHE PATENTSCHRIFT

(11) **EP 0 863 326 B1**
(45) Veröffentlichungstag und Bekanntmachung des Hinweises auf die Patenterteilung: **16.01.2002**
(21) Anmeldenummer: 98103850.8
(22) Anmeldetag: 05.03.1998
(51) Int. Cl.: F16D 65/12

(54) **Wellenbremsscheibe für Scheibenbremsanlagen von Schienenfahrzeugen**
Shaft brake disc for disc brakes of railway vehicles
Disque de freinage pour freins à disques de véhicules sur rails

(30) Priorität: 05.03.1997 DE 19708901
(43) Veröffentlichungstag der Anmeldung: 09.09.1998
(73) Patentinhaber: KNORR-BREMSE Systeme für Schienenfahrzeuge GmbH, 80809 München (DE)
(72) Erfinder: Wirth, Xaver, Dr., 85737 Ismaning (DE); Weiss, Robert, Dr., 85757 Karlsfeld (DE); Schörwerth, Mathias, 82538 Geretsried (DE)

(56) Entgegenhaltungen:
- DD-A- 123 171
- DE-U- 29 603 468
- US-A- 5 407 032

## Beschreibung

Die Erfindung betrifft eine Wellenbremsscheibe nach dem Gattungsbegriff des Patentanspruches 1.

Bremsscheiben für Achsen/Scheiben von Schienenfahrzeugen bestehen entweder einteilig (Monoblock-Scheiben) oder aus Einzelteilen, um ihre Leistungsfähigkeit zu erhöhen. Sowohl herkömmliche Eisenwerkstoffscheiben als auch Leichtmetallreibringe, z.B. aus Magnesium/Aluminium bestehend, sind mit einer Nabe aus Stahl derart verbunden, daß sich der Reibring bei Erwärmung vorzugsweise radial ausdehnen kann und gleichzeitig das Bremsmoment überträgt. Die Nabe selbst wird üblicherweise auf die Achse bzw. Welle aufgepreßt oder aufgeschrumpft (mit Erwärmung).

Um das Gewicht von Bremsscheiben der in Rede stehenden Art zu reduzieren, wurden in neuerer Zeit Reibringe aus keramikverstärktem Aluminium entwickelt, wodurch eine Gewichtsreduzierung von ca. 40 % erzielt wurde. Eine Wellenbremsscheibe für Scheibenbremsanlagen von Schienenfahrzeugen ist aus der DE-A-296 03 468 bekannt geworden.

Die US-A-5 407 032 zeigt eine Wellenbremsscheibe für Scheibenbremsanlagen von Schienenfahrzeugen, bei der zur Verhinderung der Wärmeübertragung ein Ring vorgesehen ist.

Die Aufgabe der Erfindung besteht darin, bei derartigen Wellenbremsscheiben eine weitere Gewichtsreduzierung zu erreichen, ohne daß die Qualität der Bremsmomentübertragung beeinträchtigt ist.

Zur Lösung dieser Aufgabe dienen die Merkmale nach dem Kennzeichnungsteil des Patentanspruches 1.

Durch die Verwendung von Naben aus Aluminium ist eine weitere Gewichtsreduzierung von weiteren 10 % erreichbar, was einen wesentlichen Faktor bei mit hoher Geschwindigkeit laufenden Bremsscheiben darstellt. Das Problem der relativ geringen Festigkeit des Leichtmetalls, des kleinen E-Moduls und des sehr hohen Wärmeausdehnungskoeffiezenten (Wärmeleitfähigkeit) wird gelöst, indem zwischen Innenumfang der Wellenbremsscheibe und dem tragenden Nabenflansch eine Wärmedämmschicht aufgebracht wird, welche die Wärmeübertragung zwischen Leichtmetallreibring und Leichtmetallnabe soweit verhindert, daß der kritische Temperaturbereich von ca. 120 °C -140 °C nicht überschritten wird. Auf diese Weise ist eine Bremsmomentübertragung zwischen Nabe und Achse bzw. Welle nicht beeinträchtigt. Die Wärmedämmschicht besteht im Bereich der zur Schraubverbindung zwischen den Reibringstegen und dem Nabenflansch dienenden Schrauben aus von diesen durchsetzten Isolierelementen in Form von Isolierscheiben oder Isolierplatten. Die Isolierschicht kann auch aus einem umlaufenden, jeweils Durchgangsbohrungen für die Schrauben aufweisenden Isolierring bestehen.

Um sicherzustellen, daß bei dem radialen Auswandern der Reibringstege (bei Erwärmung des Reibrings) die Wärmedämmschicht nicht aufgerieben wird oder in sonstiger Weise zerstört wird, ist erfindungsgemäß vorgesehen, zwischen der Wärmedämmschicht und den Reibringstegen ein Blechring, z. B. aus Stahl, einzubringen, der eine hervorragende Gleitfähigkeit besitzt.

In vorteilhafter Weise kann auch ein an der Gegenseite zum Nabenflansch bestehender Spannring im Gegensatz zu herkömmlichen Konstruktionen aus Leichtmetall, so aus Aluminium gefertigt werden, wobei auch in diesem Bereich eine Wärmedämmschicht zwischen Spannring und Reibringstegen aufgebracht wird.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.

Figur 1 ist eine Teilschnittansicht der Reibring-Nabenverbindung bei Verwendung von zu beiden Seiten der Reibringstege am Nabenflansch bzw. am Spannring aufgebrachten Wärmedämmschichten;

Figur 2 ist eine der Figur 1 vergleichbare Schnittansicht, bei welcher erfindungsgemäß im Bereich der Paarung Reibringstege/Nabenflansch zwischen der Wärmedämmschicht und den Reibringstegen ein für ein verbessertes Gleitverhalten des Reibrings dienender Blechring eingebracht ist;

Figur 3 ist eine Teildraufsicht von Linie III-III in Figur 2, mit Darstellung von Isolierscheiben, jedoch ohne Darstellung des Reibrings;

Figur 4 ist eine der Figur 3 vergleichbare Ansicht unter Darstellung einer weiteren Ausführungsform der Wärmedämmschicht in Form von Isolierplatten; und

Figur 5 ist eine den Figuren 3 und 4 vergleichbare Ansicht unter Darstellung einer weiteren Ausführungsform der Erfindung als Isolierring.

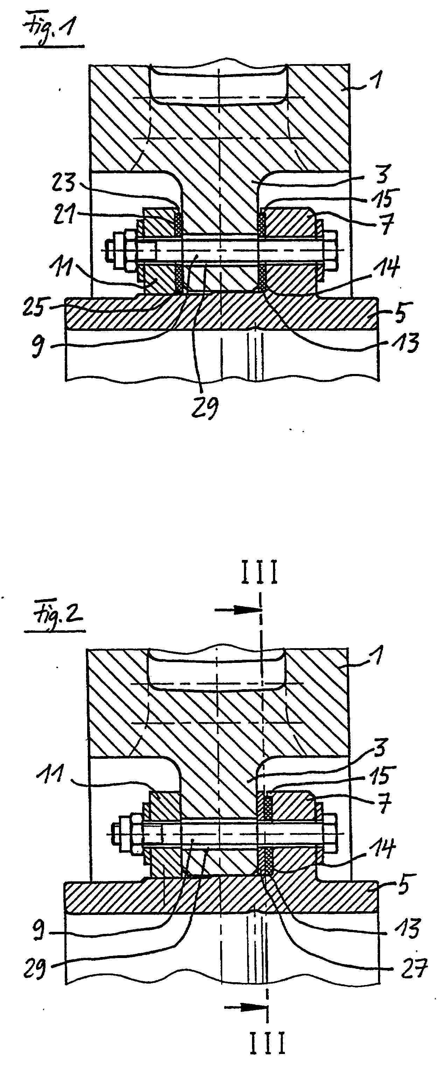

In Figur 1 der Zeichnung ist eine als ein Reibring 1 ausgebildete, an sich bekannte Bremsscheibe dargestellt, welche mit Hilfe von radial innen liegenden Reibringstegen 3 in nachfolgend beschriebener Weise mit einer Nabe 5 verbunden ist. Der Reibring besteht aus Aluminium, so aus keramikverstärktem Aluminium, wodurch gegenüber Reibringen bzw. Bremsscheiben aus Stahl Gewichtsreduzierungen um ca. 40 % erzielbar sind.

Zur Erzielung einer weiteren Gewichtsreduzierung wird erfindungsgemäß vorgeschlagen, auch die Nabe 5 aus Aluminium zu fertigen. Um dem Problem der relativ geringen Festigkeit des Leichtmetalles, des kleinen E-Moduls und des sehr hohen Wärmeausdehnungskoeffizienten (Faktor 2 gegenüber Stahl) zu begegnen, wird für die Nabe als Werkstoff Aluminium mit relativ hoher Festigkeit (warm ausgehärtet) verwendet, um den notwendigen Schrumpfdruck auf der (in der Zeichnung nicht dargestellten) Achse zu erreichen. Bei einer Bremsscheibe mit Plansitz der in Rede stehenden Art bestehen große Kontaktflächen zwischen dem Reibring und der Nabe, so daß geringe Spannungen in den Anbindungsteilen (Flansch der Nabe) entstehen. Der geringe E-Modul des Aluminium wird durch ein hohes Übermaß des Schrumpfsitzes zwischen Welle und Nabe kompensiert. So wird ein übliches Übermaß bei St-Naben von 0,30 mm zu einem Übermaß von 0,50 mm für Alu-Naben.

Aufgrund der guten Wärmeleitung von Aluminium würde die bei Bremsungen entstehende Temperatur des Reibrings bauartbedingt mehr oder weniger schnell in die Nabe 5 geleitet. Die Nabe würde sich erwärmen und ausdehnen, und zwar um den Faktor 2 mehr als eine Vergleichsnabe aus Stahl. Hierdurch würde der Preßsitz ( bei kalter Welle angenommen) zwischen der Alu-Nabe und der (nicht dargestellten) St-Welle schon bei ca. 120 °C -140 °C verloren gehen. Eine Bremsmomentübertragung wäre dadurch nicht mehr möglich.

Zur Beseitigung der vorgenannten Probleme wird zwischen Nabenflansch 7 und den Reibringstegen 3 eine Wärmeisolierschicht eingebracht, wie nachfolgend erläutert ist:

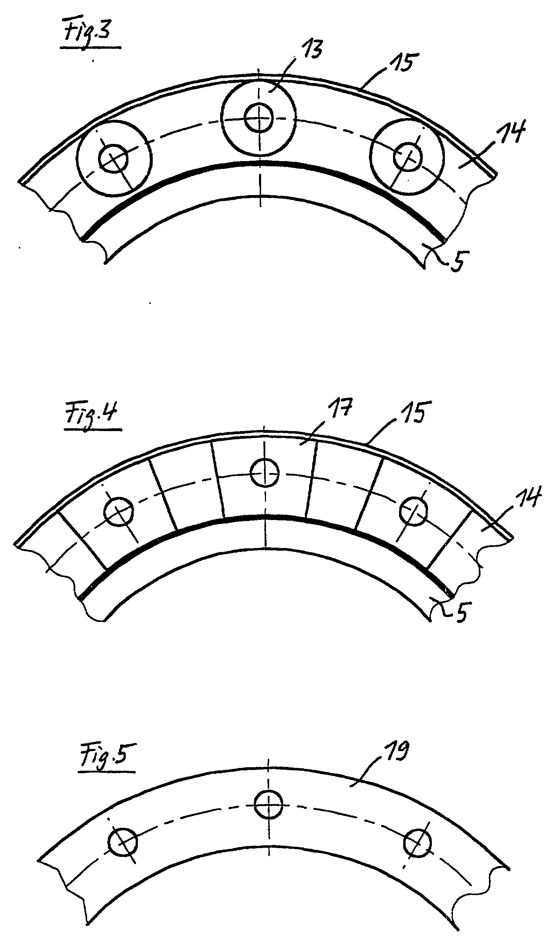

Gemäß Schnittansicht nach Figur 1 und Teildraufsicht nach Figur 3 ist im dargestellten Ausführungsbeispiel der Reibring mittels mehrerer auf einem Teilkreis angeordneter Schrauben 9 mit der Nabe 5 verschraubt, wobei die Schrauben 9 Bohrungen in den radial innen liegenden Reibringstegen 3 des Reibrings 1 und Bohrungen im Nabenflansch 7 der aus Aluminium bestehenden Nabe 5 durchsetzen. Als Gegenstück zum Nabenflansch 7 ist ein Spannring 11 vorgesehen, welcher im Ausführungsbeispiel nach Figur 1 aus Aluminium besteht und an der bezüglich Darstellung linken Seite der Reibringstege 3 angelegt und gegenüber dieser Seite verspannt ist. Zur Vermeidung der Wärmeübertragung zwischen dem aus Aluminium bestehenden Reibring 1 und der gleichfalls aus Aluminium bestehenden Nabe 5 sind jeweils im Bereich der Schrauben 9 zwischen den Reibringstegen 3 des Reibrings und dem Nabenflansch 7 Isolierscheiben 13 als Wärmedämmschicht eingebracht. Hierdurch ist eine Wärmeübertragung zwischen Reibringstegen und Nabenflansch weitgehend ausgeschlossen, d.h. die Nabe 5 erreicht nicht diejenigen kritischen Temperaturen, bei welchen sich der Preß- oder Schrumpfsitz gegenüber der Welle lockert. Pro Reibringsteg und Schraube ist eine derartige Isolierscheibe vorgesehen; vorzugsweise ist sie in einer Nut 14 des Nabenflansches 7 eingefaßt und radial außenseitig durch eine Schulter 15 abgefangen. Eine Mitnahme der Isolierscheiben 13 durch die sich thermisch bewegenden, also von der Nabe abhebenden Reibringstege 3 ist hierdurch ausgeschlossen.

In den Figuren 4 und 5 sind weitere Ausführungsbeispiele von Wärmedämmschichten wiedergegeben. Gemäß Figur 4 sind Isolierplatten 17 vorgesehen, welche bündig am Außenumfang der Schulter 15 begrenzt sind und innenseitig auf der Nabe 5 aufliegen. Figur 5 zeigt die Ausgestaltung der Wärmedämmschicht als Isolierring 19, welcher durchgehend verlegt ist und in einer den Ausführungen nach Figur 3 und 4 vergleichbaren Weise radial außenseitig durch eine Schulter abgefangen ist.

Nachdem das Problem der Wärmeübertragung auch zwischen Reibring, Spannring und Nabe existieren würde, sind zwischen dem aus Aluminium bestehenden Spannring 11 und den Reibringstegen 3 des Reibrings 1 im Bereich der Schrauben 9 Isolierscheiben 21 vorgesehen, welche grundsätzlich von vergleichbarem Aufbau wie die Isolierscheiben 13 sein können. In gleicher Weise können Wärmeisolierschichten der unter Bezugnahme auf die Figuren 4 und 5 dargestellten Ausführungsform verwendet werden. Auch im Bereich des Spannrings 11 ist eine außenseitig durch eine Schulter 23 begrenzte Nut 25 vorgesehen, in welche die Dämm- bzw. Isolierelemente eingebracht sind. Vorzugsweise ist die Isolierschicht aufgeklebt oder aufgespritzt; ihre Dicke kann den jeweiligen Gegebenheiten angepaßt werden. Was den zylindrischen Sitz der Reibringstege gegenüber der Nabe betrifft (Figur 1 und 2) so muß dieser nicht isoliert werden, da bei Reibringerwärmung sofort ein Spalt entsteht, d.h. der Reibring dehnt sich radial gerichtet aus. Durch diesen Spalt ist eine gute Isolation gegeben.

Die erfindungsgemäße Verwendung von aus Leichtmetall, z.B. Aluminium, bestehenden Naben zur Übertragung des Bremsmoments zwischen der aus Aluminium bestehenden Bremsscheibe und der Achse des Schienenfahrzeugs ist nicht auf die in Figur 1 dargestellte Ausführungsform beschränkt. In Figur 2 ist eine weitere Ausführungsform dargestellt, bei welcher im Bereich des Spannrings 11 auf die Wärmedämmschicht zwischen Spannring und Reibringstegen verzichtet wurde, da der Spannring, aus Stahl bestehend, weit geringere Wärmeleiteigenschaften besitzt als z.B. Aluminium. Im Bereich der rechtsseitig dargestellten Anbindung ist zwischen der Wärmedämmschicht in Form der Isolierscheiben, Isolierplatten etc. und den Reibringstegen 3 erfindungsgemäß ein Blechring 27 eingebracht. Ein derartiger Blechring, z.B. aus Stahl bestehend, besitzt hervorragende Gleitfähigkeit gegenüber den Reibringstegen. Hierdurch ist sichergestellt, daß bei dem radialen Auswandern der Reibringstege (bei Erwärmung des Reibrings) die Wärmedämmschicht nicht aufgerieben oder in sonstiger Weise zerstört wird. Bei Erwärmung des Reibrings bleiben der Spannring und der Blechring in ihrer in der Zeichnung dargestellten Position stehen und die Reibringstege führen - ermöglicht durch die Durchgangsbohrurig 29 in den Reibringstegen - Radialbewe-gungen gegenüber dem Spannring und dem Blechring aus. Wenn anstelle des Spannrings 11 der in Figur 2 dargestellten Anordnung ein Spannring aus Aluminium verwendet wird, dann kann auch hier eine Dämmschicht und zusätzlich ein Blechring vorgesehen sein, also eine spiegelbildliche Anordnung zur rechtsseitigen Paarung.

### Bezugszeichenliste

- 1: Reibring
- 3: Reibringsteg
- 5: Nabe
- 7: Nabenflansch
- 9: Schraube
- 11: Spannring
- 13: Isolierscheibe
- 14: Nut
- 15: Schulter
- 17: Isolierplatte
- 19: Isolierring
- 21: Isolierscheibe
- 23: Schulter
- 25: Nut
- 27: Blechring
- 29: Durchgangsbohrung

## Patentansprüche

1. Wellenbremsscheibe für Scheibenbremsanlagen von Schienenfahrzeugen, mit einem aus Leichtmetall bestehenden Reibring, welcher an seinem Innenumfang durch Schrauben mit einem von der Nabe auskragenden Nabenflansch verbunden ist sowie einer zwischen Nabenflansch (7) und Reibring (1) befindlichen Wärmedämmschicht **gekennzeichnet dadurch, daß** zwischen den Reibringstegen (3) und der Wärmedämmschicht ein Blechring (27) von guten Gleitfähigkeiten gegenüber den Reibringstegen eingebracht und gleichfalls von den Schrauben durchsetzt ist.

2. Wellenbremsscheibe nach Anspruch 1, bei welcher der Innenumfang des Reibrings aus Reibringstegen gebildet ist, welche mittels sie durchsetzender Schrauben mit dem Nabenflansch und auf der Gegenseite mit einem Spannring verspannt sind, **dadurch gekennzeichnet, daß** die Wärmedämmschicht aus einem Isolierring (19) oder aus einzelnen Isolierelementen (Isolierscheiben 13; Isolierplatten 17) besteht, welche zwischen den Reibringstegen (3) und dem Nabenflansch (7) angeordnet sind.

3. Wellenbremsscheibe nach Anspruch 2, **dadurch gekennzeichnet, daß** der (Isolierring (19) oder die Wärmedämmschicht in Form von einzelnen Isolierelementen (Isolierscheiben 13; Isolierplatten 17) besteht, welche den Reibringstegen (3) zugewandt in eine umlaufende Nut (14) des Nabenflansches (7) eingesetzt und von den Schrauben (9) der Schraubenverbindung durchsetzt sind.

4. Wellenbremsscheibe nach einem der vorangehenden Ansprüche, bei welcher auch der Spannring aus einem Leichtmetall, wie Aluminium, besteht, **dadurch gekennzeichnet, daß** an der den Reibringstegen zugewandten Innenseite des Spannrings (11) eine Wärmedämmschicht aufgebracht ist.

5. Wellenbremsscheibe nach Anspruch 4, **dadurch gekennzeichnet, daß** an der den Reibringstegen (3) zugewandten Innenseite des Spannrings (11) eine umlaufende Nut (25) eingelassen ist, in welche die Wärmedämmschicht in Form von Isolierscheiben, Isolierplatten oder in Form eines Isolierrings eingebracht ist.

6. Wellenbremsscheibe nach einem der vorangehenden Ansprüche, **dadurch gekennzeichnet, daß** die Isolierschicht aufgeklebt oder aufgespritzt ist.

7. Wellenbremsscheibe nach Anspruch 2, bei welcher der Spannring (11) aus Stahl besteht, **dadurch gekennzeichnet, daß** die Paarung Spannring-/Reibringstege ohne Wärmedämmschicht besteht.

## Claims

1. Axle-mounted brake disk for disk brake systems of rail vehicles, comprising a friction ring made of light metal, which at its inner periphery is connected by screws to a hub flange projecting from the hub, as well as a heat insulating layer situated between hub flange (7) and friction ring (1), **characterized in that** a sheet metal ring (27), which has good sliding properties relative to the friction ring webs, is introduced between the friction ring webs (3) and the heat insulating layer and is likewise penetrated by the screws.

2. Axle-mounted brake disk according to claim 1, in which the inner periphery of the friction ring is formed by friction ring webs, which are braced by means of screws, which penetrate them, with the hub flange and at the opposite side with a tension ring, **characterized in that** the heat insulating layer comprises an insulating ring (19) or individual insulating elements (insulating disks 13; insulating plates 17), which are disposed between the friction ring webs (3) and the hub flange (7).

3. Axle-mounted brake disk according to claim 2, **characterized in that** the insulating ring (19) or the heat insulating layer is in the form of individual insulating elements (insulating disks 13; insulating plates 17), which are inserted into a circumferential groove (14) of the hub flange (7) so as to be directed towards the friction ring webs (3) and are penetrated by the screws (9) of the screw-connection.

4. Axle-mounted brake disk according to one of the preceding claims, in which the tension ring is also made of a light metal such as aluminium, **characterized in that** a heat insulating layer is provided on the inside of the tension ring (11) directed towards the friction ring webs.

5. Axle-mounted brake disk according to claim 4, **characterized in that** let into the inside of the tension ring (11) directed towards the friction ring webs (3) is a circumferential groove (25), into which the heat insulating layer in the form of insulating disks, insulating plates or in the form of an insulating ring is introduced.

6. Axle-mounted brake disk according to one of the preceding claims, **characterized in that** the insulating layer is glued or sprayed on.

7. Axle-mounted brake disk according to claim 2, in which the tension ring (11) is made of steel, **characterized in that** the pairing of tension ring and friction ring webs is without a heat insulating layer.

## Revendications

1. Disque de frein d'essieu pour freins à disques de véhicules ferroviaires, comportant une bague de friction réalisée en métal léger qui, sur sa circonférence intérieure, est assemblée par boulons à une bride de moyeu faisant saillie du moyeu, et comportant une couche d'isolation thermique entre la bride (7) de moyeu et la bague (1) de friction, **caractérisé en ce qu'**une bague (27) en tôle, possédant une bonne faculté de glissement sur les nervures de la bague de friction, est introduite entre les nervures (3) de la bague de friction et la couche d'isolation thermique et est également traversée par les boulons.

2. Disque de frein d'essieu suivant la revendication 1, dans lequel la circonférence intérieure de la bague de friction est constituée de nervures de bague de friction, qui sont assemblées avec serrage, au moyen de boulons qui les traversent, à la bride de moyeu et sur le côté opposé à une bague de serrage, **caractérisé en ce que** la couche d'isolation thermique est constituée d'une bague (19) isolante ou d'éléments isolants individuels (rondelles 13 isolantes; plaques 17 isolantes), qui sont disposés entre les nervures (3) de bague de friction et la bride (7) de moyeu.

3. Disque de frein d'essieu suivant la revendication 2, **caractérisé en ce que** la bague (19) isolante ou la couche d'isolation thermique est réalisée sous forme d'éléments isolants individuels (rondelles 13 isolantes ; plaques 17 isolantes) qui sont insérés, en étant tournés vers les nervures (3) de bague de friction, dans une rainure (14) entourante de la bride (7) de moyeu et qui sont traversés par les boulons (9) de l'assemblage boulonné.

4. Disque de frein d'essieu suivant l'une des revendications précédentes, dans lequel la bague de serrage est également réalisée en métal léger, aluminium par exemple, **caractérisé en ce qu'**une couche d'isolation thermique est appliquée sur le côté intérieur, tourné vers les nervures de bague de friction, de la bague (11) de serrage.

5. Disque de frein d'essieu suivant la revendication 4, **caractérisé en ce qu'**une rainure (25) entourante est pratiquée sur le côté intérieur, tourné vers les nervures (3) de bague de friction, de la bague (11) de serrage, rainure dans laquelle la couche d'isolation thermique est introduite sous forme de rondelles isolantes, de plaques isolantes ou d'une bague isolante.

6. Disque de frein d'essieu suivant l'une des revendications précédentes, **caractérisé en ce que** la couche isolante est appliquée par collage ou injection.

7. Disque de frein d'essieu suivant la revendication 2, dans lequel la bague (11) de serrage est réalisée en acier, **caractérisé en ce que** l'appariement entre la bague de serrage et les nervures de la bague de friction s'effectue sans couche d'isolation thermique.
